# EUROPEAN PATENT APPLICATION

(11) **EP 4 645 079 A1**
(43) Date of publication of application: **05.11.2025**
(21) Application number: 24757016.1
(22) Date of filing: 03.01.2024
(51) Int. Cl.: G06F 9/455, G06F 9/4401, G06F 9/451

(54) **ELECTRONIC DEVICE AND METHOD FOR CONTROLLING SAME**

(30) Priority: 15.02.2023 KR 20230020132
(71) Applicant: Samsung Electronics Co., Ltd., Suwon-si, Gyeonggi-do 16677 (KR)
(72) Inventor: SEO, Seokhun, Suwon-si Gyeonggi-do 16677 (KR); KIM, Dukwoo, Suwon-si Gyeonggi-do 16677 (KR); LEE, Myungho, Suwon-si Gyeonggi-do 16677 (KR)
(74) Representative: Walaski, Jan Filip
(86) International application number: PCT/KR2024/000115
(87) International publication number: WO 2024/172284

(57) **Abstract**

An electronic device is disclosed. The present electronic device comprises: a communication interface; a memory storing information about an operation system (OS) that processes a signal received from an external device according to each request type; and one or more processors connected to the memory to control the electronic device, wherein the one or more processors, when a signal is received from the external device through the communication interface while a plurality of OSs are running, identify the request type of the received signal, identify, from among the plurality of OSs, an OS to process the received signal on the basis of the identified request type of the signal and the information stored in the memory, and control the identified OS to process the received signal.

## Description

### [Technical Field]

The present disclosure relates to an electronic device and a method for controlling the same, and more particularly, to an electronic device operated based on a plurality of operating systems (OSs), and a method for controlling the same.

### [Background Art]

A virtual device may be implemented as a structure that is executed using an operating system (OS) of a main system or based on another virtual operating system.

Programs executed inside a conventional virtual device are unable to access another virtual device or the main system. Therefore, the conventional virtual device is unable to control a setting of the main system or to control an external device connected to the main system.

Conventionally, the OS of the main system among a plurality of OSs needs to process an input signal received from the external device while the plurality of OSs are executed on one device.

In detail, one device may execute a host OS and the host OS may execute a container OS. In this case, interference and conflicts between the host OS and the container OS may occur if the host OS and the container OS simultaneously control the external device.

Accordingly, only the host OS is required to control the external device or the system setting, and the container OS is able to use only limited functions.

### [Disclosure of Invention]

### [Solution to Problem]

According to an embodiment of the present disclosure, provided is an electronic device including: a communication interface; a memory storing information on an operating system (OS) for processing a signal for each request type that is received from an external device; and at least one processor connected to the memory to control the electronic device, wherein the at least one processor is configured to identify a request type of a received signal if a signal is received from the external device through the communication interface during execution of a plurality of OSs, identify an OS for processing the received signal from among the plurality of OSs on the basis of the identified request type of the signal and the information stored in the memory, and control the received signal to be processed by the identified OS.

According to an embodiment of the present disclosure, provided is a method for controlling an electronic device, the method including: identifying a request type of a received signal if a signal is received from an external device through a communication interface during execution of a plurality of operating systems (OSs); identifying an OS for processing the received signal from among the plurality of OSs on the basis of the identified request type of the signal and information stored in a memory on the OS for processing the signal for each request type that is received from the external device; and controlling the received signal to be processed by the identified OS.

According to an embodiment of the present disclosure, provided is a non-transitory computer-readable recording medium including a program for executing a method for controlling an electronic device, wherein the method includes identifying a request type of a received signal if a signal is received from an external device through a communication interface during execution of a plurality of operating systems (OSs), identifying an OS for processing the received signal from among the plurality of OSs on the basis of the identified request type of the signal and information stored in a memory on the OS for processing the signal for each request type that is received from the external device, and controlling the received signal to be processed by the identified OS.

### [Brief Description of Drawings]

Aspects according to specific embodiments of the present disclosure and other aspects will become apparent from the following detailed description taken in conjunction with the accompanying drawings.
FIG. 1 is a block diagram showing a configuration of an electronic device according to an embodiment of the present disclosure.
FIG. 2 is a diagram showing an operation of an electronic device according to an embodiment of the present disclosure.
FIG. 3 is a diagram showing information stored in a memory according to an embodiment of the present disclosure.
FIG. 4 is a flowchart showing an operation of an electronic device according to an embodiment of the present disclosure.
FIG. 5 is a flowchart showing an operation of an electronic device for storing service usage information in the memory according to an embodiment of the present disclosure.
FIG. 6 is a flowchart showing an operation of an electronic device for storing setting information in the memory according to an embodiment of the present disclosure.
FIG. 7 is a flowchart showing a method of an electronic device for setting an operating system (OS) for processing a signal for each request type according to an embodiment of the present disclosure.
FIG. 8 is a flowchart for describing an operation of an electronic device according to an embodiment of the present disclosure.

### [Mode for the Invention]

The present disclosure may be variously modified and have several embodiments, and specific embodiments of the present disclosure are thus illustrated in the accompanying drawings and described in detail in the detailed description. However, it should be understood that the scope of the present disclosure is not limited to the specific embodiments, and includes all modifications, equivalents, and alternatives according to the embodiments of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiments of the present disclosure may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context
In the present disclosure, the expression "have", "may have", "include", "may include" or the like, indicates the presence of a corresponding feature (for example, a numerical value, a function, an operation, or a component such as a part), and does not exclude the presence of an additional feature.

In the present disclosure, the expression "A or B", "least one of A and/or B" or "one or more of A and/or B" or the like may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions "first", "second", and the like used in the present disclosure may indicate various components regardless of the sequence and/or importance of the components. These expressions are only used to distinguish one component and another component from each other, and do not limit the corresponding components.

If any component (for example, a first component) is mentioned to be "(operatively or communicatively) coupled with/to" or "connected to" another component (for example, a second component), it should be understood that the any component is directly coupled to another component or may be coupled to another component through yet another component (for example, a third component).

On the other hand, if any component (for example, the first component) is mentioned to be "directly coupled with/to" or "directly connected to" another component (for example, the second component), it should be understood that yet another component (for example, the third component) is not present between any component and another component.

An expression "configured (or set) to" used in the present disclosure may be replaced by an expression "suitable for", "having the capacity to", "designed to", "adapted to", "made to" or "capable of" based on a context. The expression "configured (or set) to" may not necessarily indicate "specifically designed to" in hardware.

Instead, an expression a "device configured to" in any context may indicate that the device may "perform~" together with another device or component. For example, a "processor configured (or set) to perform A, B, and C" may indicate a dedicated processor (for example, an embedded processor) that may perform the corresponding operations or a general-purpose processor (for example, a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, the various elements and areas in the drawings are schematically shown. Therefore, the spirit of the present disclosure is not limited by relative sizes or intervals shown in the accompanying drawings.

Hereinafter, the embodiments of the present disclosure are described in detail with reference to the accompanying drawings so that those skilled in the art to which the present disclosure pertains may easily practice the present disclosure.

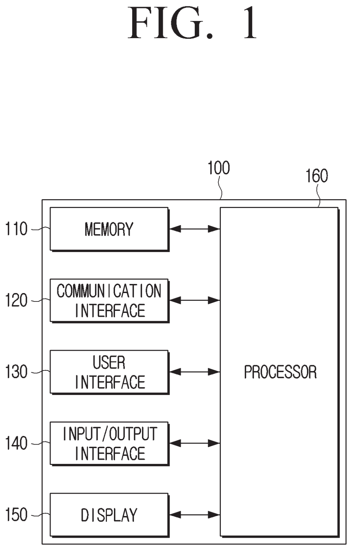

FIG. 1 is a block diagram showing a configuration of an electronic device according to an embodiment of the present disclosure.

The electronic device 100 may include a memory 110, a communication interface 120, a user interface 130, an input/output interface 140, a display 150, and a processor 160. The electronic device 100 may omit some of the components described above and may further include other components.

The electronic device 100 may include the memory 110, the communication interface 120, and the processor 160. The electronic device 100 may omit some of the components described above and may further include other components.

In addition, the electronic device 100 may be implemented as a television (TV), which is only an embodiment, and may be implemented in any of various forms such as a smartphone, a smart TV, a set-top box, a mobile phone, a server, a personal digital assistant (PDA), a laptop, a media player, an e-book reader, a digital broadcasting terminal, a navigation device, a kiosk, an MP3 player, a wearable device, a home appliance, or another mobile or non-mobile computing device.

The memory 110 may store at least one instruction regarding the electronic device 100. The memory 110 may store an operating system (O/S) for operating the electronic device 100. In addition, the memory 110 may store various software programs or applications for operating the electronic device 100 according to various embodiments of the present disclosure. In addition, the memory 110 may include a semiconductor memory such as a flash memory, or a magnetic storing medium such as a hard disk.

In detail, the memory 110 may store various software modules for performing the operation of the electronic device 100 according to various embodiments of the present disclosure, and the processor 160 may control the operation of the electronic device 100 by executing the various software modules stored in the memory 110. That is, the memory 110 may be accessed by the processor 160, and the processor 160 may perform readout, recording, correction, deletion, update and the like of data in the memory 110.

Meanwhile, in the present disclosure, the term "memory 110" may be used as a concept including the memory 110, a read only memory (ROM, not shown), a random access memory (RAM, not shown) inside the processor 160, or a memory card (not shown) (e.g., micro secure digital (SD) card or a memory stick) mounted in the electronic device 100.

In addition, the communication interface 120 is a component that includes circuitry and may communicate with an external device or a server. The communication interface 120 may communicate with the external device or the server based on a wired or wireless communication method. The communication interface 120 may include a Bluetooth module (not shown), a wireless fidelity (Wi-Fi) module (not shown), an infrared (IR) module, a local area network (LAN) module, an Ethernet module, or the like. Here, each communication module may be implemented in the form of at least one hardware chip. In addition to the above-described communication methods, a wireless communication module may include at least one communication chip for performing the communication based on various wireless communication standards such as ZigBee, universal serial bus (USB), mobile industry processor interface camera serial interface (MIPI CSI), 3rd generation (3G), 3rd generation partnership project (3GPP), long term evolution (LTE), LTE advanced (LTE-A), 4th generation (4G), and 5th generation (5G). However, this configuration is only an embodiment, and the communication interface 120 may use at least one communication module among various communication modules.

The user interface 130 is a component for receiving a user command to control the electronic device 100. The user interface 130 may be implemented as a device such as a button, a touch pad, a mouse, or a keyboard, or may also be implemented as a touchscreen capable of performing both display and manipulation input functions. Here, the button may be any of various types of buttons, such as a mechanical button, a touch pad, or a wheel, and may be disposed on any portion of a body appearance of the electronic device100, such as a front surface, a side surface, or a rear surface. The electronic device 100 may obtain various user inputs through the user interface 130.

The input/output interface 140 may be any of a high definition multimedia interface (HDMI), a mobile high-definition link (MHL), a universal serial bus (USB), a DisplayPort (DP), a thunderbolt, a video graphics array (VGA) port, a red-green-blue (RGB) port, a D-subminiature (D-SUB), or a digital visual interface (DVI).

The input/output interface 140 may input/output at least one of audio or video signals. The input/output interface 140 may include a port for inputting and outputting only an audio signal and a port for inputting and outputting only a video signal as its separate ports, or may be implemented as a single port for inputting and outputting both the audio signal and the video signal. The electronic device 100 may output the video signal for displaying a user interface (UI) including an UI element corresponding to content through the input/output interface 140.

The display 150 may be implemented as a display including a self-luminous element, or a display including a non self-luminous element and a backlight. For example, the display 150 may be implemented as any of various types of displays, such as a liquid crystal display (LCD), an organic light-emitting diode (OLED) display, a light emitting diode (LED) display, a micro-LED display, a mini-LED display, a plasma display panel (PDP), a quantum dot (QD) display, or a quantum dot light-emitting diode (QLED) display. The display 150 may also include a driving circuit, a backlight unit, and the like, which may be implemented in a form such as a-si thin film transistor (TFT), a low temperature poly silicon (LTPS) TFT, or an organic TFT (OTFT).

The processor 160 may control overall operations and functions of the electronic device 100. In detail, the processor 160 may be connected to the configuration of the electronic device 100 including the memory 110, and may control the overall operations of the electronic device 100 by executing at least one instruction stored in the memory 110 as described above.

The processor 160 may be implemented in various ways. For example, the processor 160 may be implemented as at least one of an application specific integrated circuit (ASIC), a logic integrated circuit, an embedded processor, a microprocessor, a hardware control logic, a hardware finite state machine (FSM), or a digital signal processor (DSP). Meanwhile, in the present disclosure, the term "processor 160" may be used as a concept including a central processing unit (CPU), a graphic processing unit (GPU), a main processing unit (MPU), or the like.

In particular, the processor 160 may include at least one processor. In detail, at least one processor may include at least one of a central processing unit (CPU), a graphic processing unit (GPU), an accelerated processing unit (APU), a many integrated core (MIC), a digital signal processor (DSP), a neural processing unit (NPU), a hardware accelerator, or a machine learning accelerator. At least one processor may control one or any combination of other components included in the electronic device, and may perform operations related to communication or data processing. At least one processor may execute at least one program or instruction stored in the memory. For example, at least one processor may perform a method according to an embodiment of the present disclosure by executing at least one instruction stored in the memory.

If the method according to an embodiment of the present disclosure includes a plurality of operations, the plurality of operations may be performed by one processor, or may be performed by a plurality of processors. That is, if a first operation, a second operation, and a third operation are performed by the method according to an embodiment, the first operation, the second operation, and the third operation may all be performed by a first processor, or the first operation and the second operation may be performed by the first processor (e.g., the generic-purpose processor) and the third operation may be performed by a second processor (e.g., an artificial intelligencespecific processor).

At least one processor may be implemented as a single-core processor including a single core, or as at least one multi-core processor including multi-cores (e.g., homogeneous multi-cores or heterogeneous multi-cores). If at least one processor is implemented as the multi-core processor, each of the multi-cores included in the multi-core processor may include an internal memory of the processor, such as a cache memory or an on-chip memory, and a common cache shared by the multi-cores may be included in the multi-core processor. In addition, each of the multi-cores (or some of the multi-cores) included in the multi-core processor may independently read and perform a program instruction for implementing the method according to an embodiment of the present disclosure, or all (or some) of the multi-cores may be linked to read and perform the program instruction for implementing the method according to an embodiment of the present disclosure.

If the method according to an embodiment of the present disclosure includes a plurality of operations, the plurality of operations may be performed by the single core among the multi-cores included in the multi-core processor, or may be performed by the multi-cores. For example, if the first operation, the second operation, and the third operation are performed using the method according to an embodiment, the first operation, the second operation, and the third operation may all be performed by a first core included in the multi-core processor, or the first operation and the second operation may be performed by the first core included in the multi-core processor and the third operation may be performed by a second core included in the multi-core processor.

In an embodiment of the present disclosure, the processor 160 may indicate a system on a chip (SoC) integrating at least one processor and other electronic components, the single-core processor, the multi-core processor, or a core included in the single-core processor or the multi-core processor. Here, the core may be implemented as the CPU, the GPU, the APU, the MIC, the DSP, the NPU, the hardware accelerator, or the machine learning accelerator. However, an embodiment of the present disclosure is not limited thereto.

The operation of the processor 160 for implementing the various embodiments according to the present disclosure can be implemented using a plurality of modules.

In detail, data on the plurality of modules according to the present disclosure may be stored in the memory 110, and the processor 160 may access the memory 110 to load the data on the plurality of modules into an internal memory or buffer included in the processor 160, and then use the plurality of modules to implement the various embodiments according to the present disclosure. Here, the plurality of modules may include a neural network model obtaining module 131, a quantization module 132, a profile obtaining module 133, a quantization error identification module 134, and a neural network model selection module 135.

However, at least one of the plurality of modules according to the present disclosure may be implemented in hardware and included in the processor 160 in the form of a system on chip.

Alternatively, at least one of the plurality of modules according to the present disclosure may be implemented as a separate external device, and the electronic device 100 and each module may perform the communication and perform the operation according to the present disclosure.

Hereinafter, the operation of the electronic device 100 according to the present disclosure may be described in detail with reference to the accompanying drawings.

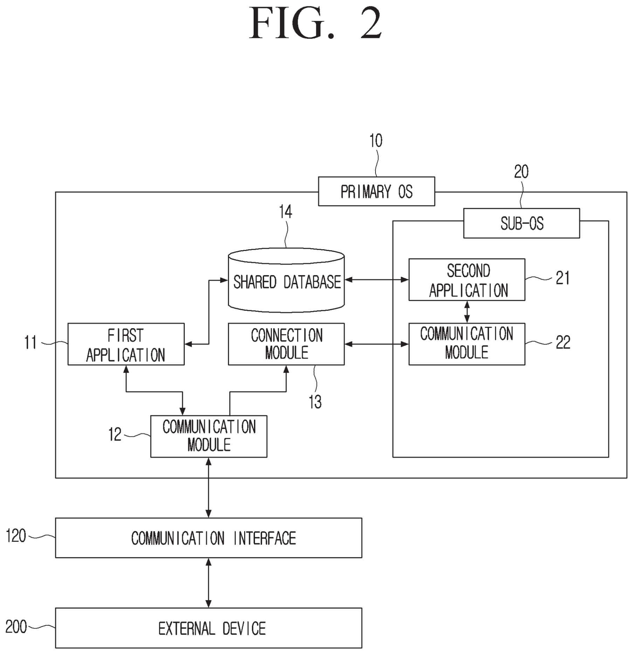

Referring to FIG. 2, the electronic device 100 may operate a plurality of OSs 10 and 20 on the electronic device 100.

Here, the plurality of OSs 10 and 20 may include a primary OS 10 and a sub-OS 20. According to an embodiment, the primary OS 10 may be an OS implemented in a physical space of the electronic device 100, and the sub-OS 20 may be an OS implemented in a virtual space (or a virtualization layer). Here, the sub-OS 20 may be implemented in a container form on the primary OS 10.

Here, a container refers to a type of virtualization method and a type of process virtualization. Container-based virtualization technology may refer to a technology for dividing the inside of a host operating system (OS) into a kernel space for managing a physical resource and a user space for executing a user process, that is, an application (APP), and for classifying the user space into several regions to allocate and share hardware resources used by each user process. However, the sub-OS 20 may also be implemented as a virtual machine OS rather than a container OS.

In addition, the electronic device 100 may obtain a signal from an external device 200 through the communication interface 120.

The electronic device 100 may identify a request type of the obtained signal if the signal is obtained from the external device 200.

According to an embodiment, the electronic device 100 may obtain at least one of a request or a command included in the signal received from the external device 200 by parsing the signal. Here, the request or command may include information on an operation to be performed by the electronic device 100 or a function to be executed on the electronic device 100. For example, the operation or function to be executed on the electronic device 100 may include a communication connection operation, a control operation, a mirroring function, or the like. For example, the electronic device 100 may obtain information on the operation to be performed by the electronic device 100 or the function to be executed on the electronic device 100 on the basis of a value included in a specific field in a Bluetooth communication packet.

In addition, the electronic device 100 may identify a type of the obtained request or command. For example, the type of the request or command may include a type of operation to be performed by the electronic device 100 or a type of function to be executed on the electronic device 100 based on the request or command. Here, the type of operation to be performed by the electronic device 100 or the type of function to be executed on the electronic device 100 may be determined based on different communication methods (e.g., Bluetooth communication or wireless fidelity (Wi-Fi) communication), components for performing the requested operation or function (e.g., a display, or a speaker), or the like.

For example, if a Bluetooth signal is received from the external device 200, the electronic device 100 may identify whether the Bluetooth signal is a communication connection request signal or a mirroring request signal, and perform a corresponding operation based on a request type of the Bluetooth signal.

Alternatively, if a Wi-Fi signal is received from the external device 200, the electronic device 100 may identify whether the Wi-Fi signal is a communication connection request signal or a mirroring request signal, and perform a corresponding operation based on a request type of the Wi-Fi signal.

Alternatively, if the mirroring request signal is received from the external device 200, the electronic device 100 may identify whether the obtained request signal is a screen mirroring request signal or a sound mirroring request signal, and control at least one of the display or the speaker based on a request type of a mirroring signal.

In addition, the electronic device 100 may identify an OS for processing the received signal from among the plurality of OSs 10 and 20 on the basis of the identified request type of the signal and information stored in the memory 110.

Here, the information stored in the memory 110 may be a shared database 14 included in the primary OS. Here, the sub-OS 20 may access the shared database 14 of the primary OS 10 and read or write data.

In addition, the shared database 14 may include indicator information indicating whether the OS for processing the signal for each request type that is received from the external device 200 is the primary OS or the sub-OS. According to an embodiment, the indicator information for each request type of the signal may be in the form of a lookup table, and is not limited thereto.

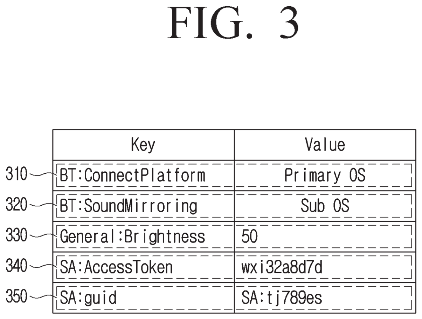

For example, the shared database 14 according to an embodiment of the present disclosure may be implemented as shown in FIG. 3.

Referring to FIG. 3, the shared database 14 may match and store the OS for processing the received signal for each request type of the received signal.

For example, the signal received from the external device 200 may be a Bluetooth connection request signal. Here, the shared database 14 may include indicator information 310 indicating that an OS for processing the Bluetooth connection request signal is the primary OS.

Alternatively, the signal received from the external device 200 may be a sound mirroring request signal. Here, the shared database 14 may include indicator information 320 indicating that an OS for processing the sound mirroring request signal is the sub-OS.

Meanwhile, the shared database 14 may store setting information of the electronic device 100. Here, the shared database 14 may include the indicator information indicating a setting value of the setting information of the electronic device 100 for each type.

For example, the shared database 14 may include indicator information 330 indicating that a brightness setting value of the electronic device 100 is 50.

Meanwhile, the shared database 14 may store service usage information. Here, the shared database 14 may store a data value of the service usage information for each type.

For example, a type of the service usage information may include an access token obtained by logging into a service and a globally unique identifier (GUID).

Here, the shared database 14 may include indicator information 340 indicating that an access token value is wxi32a8d7d and indicator information 350 indicating that the globally unique identifier is SA:tj789es.

In addition, the electronic device 100 may identify the OS matching the request type of the received signal and stored in the shared database 14 as the OS for processing the received signal.

In detail, if the primary OS 10 is identified as the OS for processing the received signal, the electronic device 100 may control the received signal to be processed by the primary OS 10. Here, the electronic device 100 may control the received signal to be processed by a first application 11 installed on the primary OS 10. For example, the first application 11 may be implemented as a setting application that enables the received signal to be processed by the primary OS 10, and is not limited thereto.

The first application 11 may receive an input signal of the external device 200 from the communication interface 120 through a communication module 12. Here, the communication module 12 may refer to a module that provides the input signal of the external device for use by the first application. For example, if the input signal of the external device 200 may be a Bluetooth signal, the communication module 12 may be a Bluetooth framework.

In addition, if the sub-OS 20 is identified as the OS for processing the received signal, the electronic device 100 may control the received signal to be processed by the sub-OS 20. Here, the electronic device 100 may control the received signal to be processed by a second application 21 installed on the sub-OS 20. For example, the second application 21 may be implemented as a setting application that enables the received signal to be processed by the sub-OS 20, and is not limited thereto.

Here, the second application may receive the input signal of the external device 200 from the communication interface 120 through a connection module 13 and a communication module 22. Here, the connection module 13 may refer to a module used for enabling the primary OS 10 and the sub-OS 20 to transmit and receive data. For example, the connection module 13 may be a remote procedure call (RPC) module used for enabling the primary OS 10 and the sub-OS 20 to transmit and receive data.

In addition, the communication module 22 of the sub-OS 20 may refer to a module that provides the signal received through the connection module 13 for use by the second application 21. For example, if the signal received through the connection module 13 is the Bluetooth signal, the communication module 22 may be the Bluetooth framework.

The operation of the electronic device 100 described above with reference to FIG. 2 or 3 is described in detail with reference to the drawings shown below.

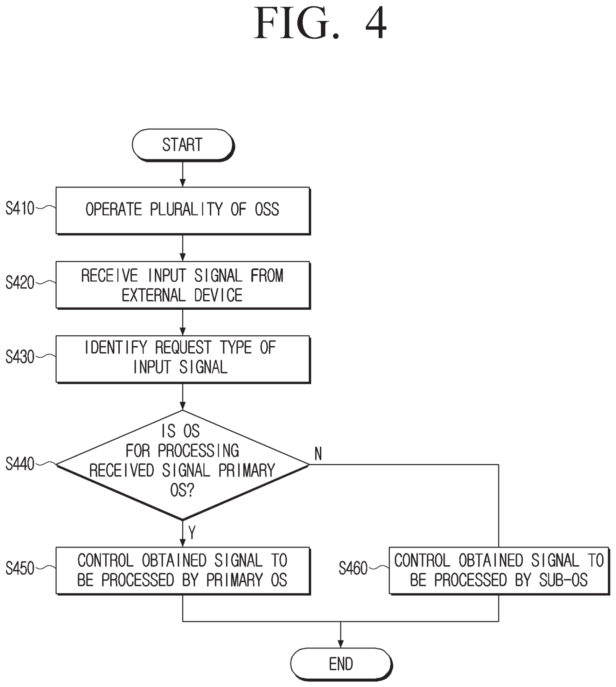

FIG. 4 is a flowchart showing the electronic device for processing the input signal obtained from the external device according to an embodiment of the present disclosure.

Referring to FIG. 4, the processor 160 may operate the plurality of OSs on the electronic device 100 (S410). Here, the plurality of OSs may include the primary OS and the sub-OS operated in the container form on the primary OS.

In addition, the processor 160 may receive the input signal from the external device during the operations of the plurality of OSs (S420).

The processor 160 may identify the request type of the input signal if the input signal is received from the external device (S430).

That is, the processor 160 may identify the request type of the received signal if the signal is received from the external device through the communication interface 120 during the operations of the plurality of OSs.

In addition, the processor 160 may identify the OS for processing the received signal on the basis of the request type of the received signal.

Here, the processor 160 may receive the signal from the external device through the communication interface 120, is not limited thereto, and may receive the signal from the external device through various interfaces such as the input/output interface.

For example, the signal received from the external device may be the Bluetooth connection request signal. Here, if the signal received from the external device is the Bluetooth connection request signal, the processor 160 may control the Bluetooth connection request signal to be processed by the primary OS, or may control the Bluetooth connection request signal to be processed by the sub-OS.

Alternatively, the signal received from the external device may be the mirroring request signal. Here, mirroring may refer to screen mirroring or sound mirroring. If the signal received from the external device is the mirroring request signal, the processor 160 may control the mirroring request signal to be processed by the primary OS, or may control the mirroring request signal to be processed by the sub-OS.

Alternatively, the signal received from the external device may be a Wi-Fi connection request signal. Here, if the signal received from the external device is the Wi-Fi connection request signal, the processor 160 may control the Wi-Fi connection request signal to be processed by the primary OS, or may control the Wi-Fi connection request signal to be processed by the sub-OS.

In addition, the processor 160 may identify the OS for processing the received signal from among the plurality of OSs on the basis of the identified request type of the signal and the information stored in the memory 110. That is, the processor 160 may identify whether the OS for processing the received signal is the primary OS (S440).

Here, the information stored in the memory 110 may include the indicator information indicating whether the OS for processing the signal for each request type that is received from the external device is the primary OS or the sub-OS. That is, the information stored in the memory 110 may be information stored by matching the request type of the signal received from the external device with the OS for processing the signal for each request type.

For example, the information stored in the memory 110 may include first indicator information indicating whether the OS for processing the signal for each request type that is received from the external device based on a first communication method is the primary OS or the sub-OS, and second indicator information indicating whether the OS for processing the signal for each request type that is received from the external device based on a second communication method is the primary OS or the sub-OS. That is, according to an embodiment, OS information corresponding to a request type for each communication method may be stored in the memory 110. For example, OS information for processing the signal based on a request type of the Bluetooth signal and OS information for processing the signal based on a request type of the Wi-Fi signal may be predetermined and stored in the memory 110.

Here, the processor 160 may identify the OS for processing the signal from among the primary OS and the sub-OS on the basis of the indicator information corresponding to the identified request type of the signal.

That is, the processor 160 may identify the OS for processing the signal from among the primary OS and the sub-OS on the basis of the first indicator information if the signal received from the external device is a signal based on the first communication method.

In addition, the processor 160 may identify the OS for processing the signal from among the primary OS and sub-OS on the basis of the second indicator information if the signal received from the external device is a signal based on the second communication method.

For example, on the basis of the information stored in the memory 110, the primary OS may be identified as the OS for processing the signal for each request type based on the first communication method. In addition, the sub-OS may be identified as the OS for processing the signal for each request type based on the second communication method.

For example, the signal based on the first communication method may be the Bluetooth signal. In addition, the signal based on the second communication method may be the Wi-Fi signal. Here, the OS for processing the Bluetooth signal may be the primary OS. Here, the information stored in the memory 110 may include the first indicator information indicating that the OS for processing the signal based on the first communication method is the primary OS. In addition, the information stored in the memory 110 may include the second indicator information indicating that the OS for processing the signal based on the second communication method is the sub-OS.

Here, if the signal based on the first communication method is received, the processor 160 may identify the primary OS as the OS for processing the signal based on the first communication method. In addition, if the signal based on the second communication method is received, the processor 160 may identify the sub-OS as the OS for processing the signal based on the second communication method.

If the OS for processing the received signal is identified, the processor 160 may control the received signal to be processed by the identified OS.

If the primary OS is identified as the OS for processing the received signal (S440-Y), the processor 160 may control the received signal to be processed by the primary OS (S450). In detail, if the primary OS is identified as the OS for processing the received signal, the processor 160 may control the received signal to be processed by an application installed on the primary OS.

In addition, if the sub-OS is identified as the OS for processing the received signal (S440-N), the processor 160 may control the received signal to be processed by the sub-OS (S460). In detail, if the sub-OS is identified as the OS for processing the received signal, the processor 160 may control the received signal to be processed by an application installed on the sub-OS.

Meanwhile, according to an embodiment of the present disclosure, the processor 160 may store the service usage information obtained during execution of a specific service performed using any one OS among the plurality of OSs in a database of the memory 110, and may use the information stored in the memory 110 during the execution of the specific service performed using another OS among the plurality of OSs.

Here, the information obtained during the execution of the specific service may be information required to use the specific service.

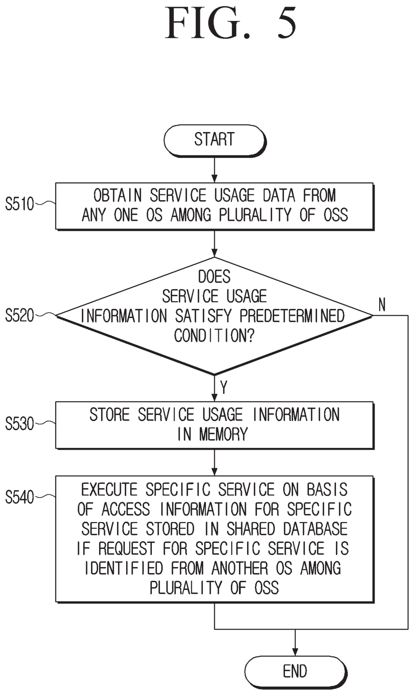

Referring to FIG. 5, the processor 160 may obtain the service usage information from any one OS among the plurality of OSs (S510).

The processor 160 may then identify whether the service usage information satisfies a predetermined condition (S520). Here, the predetermined condition may be information capable of being repeatedly used in using the service, and is not limited to.

If the service usage information satisfies the predetermined condition (S520-Y), the processor 160 may store the service usage information that satisfies the predetermined condition in the memory 110 (S530).

For example, the service usage information that satisfies the predetermined condition may be access information required to log in and access the service. In detail, the access information may include information on the access token and the globally unique identifier (GUID) for accessing information provided by the specific service if the user successfully logs in to the specific service.

That is, the processor 160 may map the access information obtained during the execution of the specific service to the access information for the specific service and store the mapped access information in the memory 110 if the specific service is executed by using any one OS among the plurality of OSs.

For example, if the user of the electronic device 100 logs in to the specific service by using one OS among the plurality of OSs, the processor 160 may obtain the access token and the globally unique identifier (GUID) from a serviceproviding server. In addition, the processor 160 may access the information provided by the specific service by using the obtained access token and globally unique identifier.

Here, the processor 160 may map the information on the access token and the globally unique identifier to the access information for the specific service and store the mapped access information in the memory 110.

In addition, the processor 160 may execute the specific service on the basis of the access information for the specific service stored in the memory if a request for the specific service is identified from another OS among the plurality of OSs (S540).

For example, if login to the specific service by using the primary OS is successful and the access information is stored in the memory 110, the processor 160 may access the specific service by the sub-OS by using the access information stored in the memory 110. Accordingly, a process for logging in to the specific service may be omitted while the specific service is used by the sub-OS.

Meanwhile, according to an embodiment of the present disclosure, if the setting information of the electronic device 100 is input through any one OS among the plurality of OSs, the processor 160 may use the input setting information of the electronic device 100 by using another OS among the plurality of OSs. For example, if the setting information of the electronic device 100 is input through any one OS among the plurality of OSs, the processor 160 may store the input setting information in the shared database 14 of the memory 110. In this case, the setting information stored in the shared database 14 may be used by another OS among the plurality of OSs.

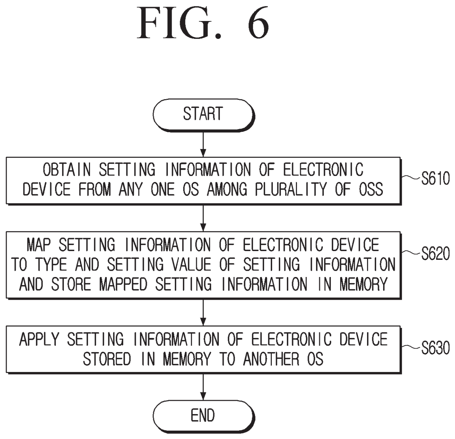

FIG. 6 is a flowchart for describing an operation of an electronic device 100 for using the setting information stored in the memory 110 according to an embodiment of the present disclosure.

Referring to FIG. 6, the processor 160 may obtain the setting information of the electronic device from any one OS among the plurality of OSs (S610). Here, the setting information of the electronic device 100 may include at least one of system setting information, display setting information, or network setting information.

In detail, the processor 160 may map the setting information of the electronic device to the type and setting value of the setting information and store the mapped setting information in the memory if the setting information of the electronic device 100 is input through any one OS among the plurality of OSs (S620).

In addition, the processor 160 may execute another OS among the plurality of OSs on the basis of the setting information stored in the memory 110.

In detail, the processor 160 may apply the setting information of the electronic device 100 stored in the memory 110 to another OS during execution of another OS among the plurality of OSs (S630).

For example, the processor 160 may map the obtained network setting information to the specific communication method and store the mapped network setting information in the memory 110 if the network setting information related to a specific communication method is obtained from any one OS among the plurality of OSs.

In addition, the processor 160 may control the communication based on the specific communication method to be performed by another OS among the plurality of OSs on the basis of the network setting information stored in the memory.

Alternatively, if the setting information of the electronic device 100 is a display brightness value of the electronic device 100, the processor 160 may control another OS screen having the display brightness value stored in the memory 110 to be displayed on the display 150.

Meanwhile, according to an embodiment of the present disclosure, the electronic device 100 may obtain a user input for setting the OS for processing the signal for each request type.

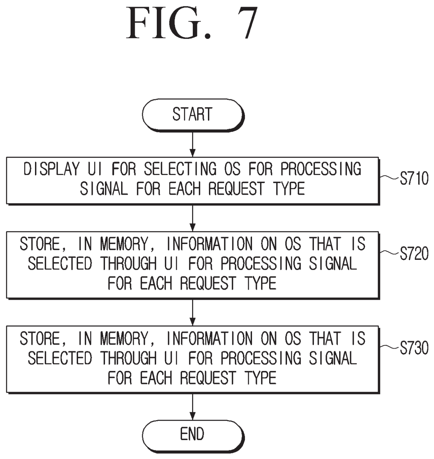

FIG. 7 is a flowchart for describing a method of an electronic device for obtaining the user input for setting the operating system (OS) for processing the signal for each request type according to an embodiment of the present disclosure.

Referring to FIG. 7, the processor 160 may control a user interface (UI) for selecting the OS for processing the signal for each request type to be displayed on the display 150 (S710).

The processor 160 may then store, in the memory 110, information on the OS that is selected through the UI for processing the signal for each request type (S720).

The processor 160 may then identify the OS for processing the received signal on the basis of the information stored in the memory 110, and control the received signal to be processed by the identified OS (S730).

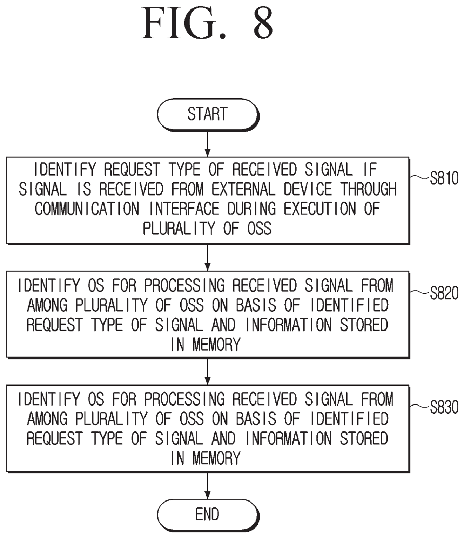

FIG. 8 is a flowchart for describing a method for controlling an electronic device 100 according to an embodiment of the present disclosure.

The electronic device 100 may identify the request type of the received signal if the signal is received from the external device through the communication interface 120 during execution of the plurality of OSs (S810).

Here, the plurality of OSs may include the primary OS and sub-OS.

The electronic device 100 may then identify the OS for processing the received signal from among the plurality of OSs on the basis of the identified request type of the signal and the information stored in the memory (S820).

Here, the information stored in the memory 110 may include the indicator information indicating whether the OS for processing the signal for each request type that is received from the external device is the primary OS or the sub-OS.

In detail, the information stored in the memory 110 may include the first indicator information indicating whether the OS for processing the signal for each request type that is received from the external device based on the first communication method is the primary OS or the sub-OS, and the second indicator information indicating whether the OS for processing the signal for each request type that is received from the external device based on the second communication method is the primary OS or the sub-OS.

The electronic device 100 may then control the received signal to be processed by the identified OS (S830).

Here, the electronic device 100 may identify the OS for processing the signal from among the primary OS and sub-OS on the basis of the indicator information corresponding to the identified request type of the signal.

In detail, the electronic device 100 may identify the OS for processing the signal from among the primary OS and sub-OS on the basis of the first indicator information if the signal received from the external device is the signal based on the first communication method.

The electronic device 100 may identify the OS for processing the signal from among the primary OS and sub-OS on the basis of the second indicator information if the signal received from the external device is the signal based on the second communication method.

Meanwhile, the electronic device 100 may map the access information obtained during the execution of the specific service to the access information for the specific service and store the mapped access information in the memory 110 if the specific service is executed by using any one OS among the plurality of OSs.

In addition, the electronic device 100 may execute the specific service on the basis of the access information for the specific service stored in the memory 110 if the request for the specific service is identified from another OS among the plurality of OSs.

Meanwhile, the electronic device 100 may map the setting information of the electronic device 100 to the type and setting value of the setting information and store the mapped setting information in the memory 110 if the setting information of the electronic device 100 is input through any one OS among the plurality of OSs. Here, the setting information of the electronic device 100 may include at least one of the system setting information, the display setting information, or the network setting information. In addition, the electronic device 100 may execute another OS among the plurality of OSs on the basis of the setting information stored in the memory 110.

Meanwhile, the electronic device 100 may map the obtained network setting information to the specific communication method and store the mapped network setting information in the memory 110 if the network setting information related to the specific communication method is obtained from any one OS among the plurality of OSs.

In addition, the electronic device 100 may control the communication based on the specific communication method to be performed by another OS among the plurality of OSs on the basis of the network setting information stored in the memory.

Meanwhile, the electronic device 100 may control the UI for selecting the OS for processing the signal for each request type to be displayed on the display 150.

In addition, the electronic device 100 may store, in the memory 110, the information on the OS that is selected through the UI for processing the signal for each request type.

Meanwhile, the term "~er/~or" or "module" used in the present disclosure may include a unit including hardware, software or firmware, and may be used interchangeably with the term, for example, a logic, a logic block, a component or a circuit. The "~er/~or" or "module" may be an integrally formed component, or a minimum unit or part performing one or more functions. For example, the module may include an application-specific integrated circuit (ASIC).

The various embodiments of the present disclosure may be implemented by software including an instruction stored in the machine-readable storage medium (for example, a computer-readable storage medium). A machine may be an apparatus that invokes the stored instruction from the storage medium, may be operated based on the invoked instruction, and may include the electronic device 100 according to the disclosed embodiments. In case that the instruction is executed by the processor, the processor may perform a function corresponding to the instruction directly or by using other components under control of the processor. The instruction may include a code provided or executed by a compiler or an interpreter. Here, the term "non-transitory" indicates that the storage medium is tangible without including a signal, and does not distinguish whether data is semi-permanently or temporarily stored in the storage medium.

The method according to the various embodiments disclosed in the present disclosure may be included and provided in a computer program product. The computer program product may be traded as a commodity between a seller and a purchaser. The computer program product may be distributed in a form of a storage medium (for example, a compact disc read only memory (CD-ROM)) that may be read by the machine or online through an application store (for example, PlayStore^{™}). In case of the online distribution, at least portions of the computer program product may be at least temporarily stored in a storage medium such as a memory of a server of a manufacturer, a server of an application store or a relay server, or be temporarily provided.

Each of components (for example, modules or programs) according to the various embodiments may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

## Claims

1. An electronic device comprising:
a communication interface;
a memory storing information on an operating system (OS) for processing a signal for each request type that is received from an external device; and
at least one processor connected to the memory to control the electronic device,
wherein the at least one processor is configured to
identify a request type of a received signal if a signal is received from the external device through the communication interface during execution of a plurality of OSs,
identify an OS for processing the received signal from among the plurality of OSs on the basis of the identified request type of the signal and the information stored in the memory, and
control the received signal to be processed by the identified OS.

2. The device of claim 1, wherein the plurality of OSs include a primary OS and a sub-OS,
the information stored in the memory includes indicator information indicating whether the OS for processing the signal for each request type that is received from the external device is the primary OS or the sub-OS, and
the at least one processor is configured to identify the OS for processing the signal from among the primary OS and the sub-OS on the basis of the indicator information corresponding to the identified request type of the signal.

3. The device of claim 2, wherein the information stored in the memory includes
first indicator information indicating whether the OS for processing the signal for each request type that is received from the external device based on a first communication method is the primary OS or the sub-OS, and
second indicator information indicating whether the OS for processing the signal for each request type that is received from the external device based on a second communication method is the primary OS or the sub-OS, and
the at least one processor is configured to
identify the OS for processing the signal from among the primary OS and the sub-OS on the basis of the first indicator information if the signal received from the external device is a signal based on the first communication method, and
identify the OS for processing the signal from among the primary OS and the sub-OS on the basis of the second indicator information if the signal received from the external device is a signal based on the second communication method.

4. The device of claim 1, wherein the at least one processor is configured to
map access information obtained during execution of a specific service to access information for the specific service and store the mapped access information in the memory if the specific service is executed by using any one OS among the plurality of OSs, and
execute the specific service on the basis of the access information for the specific service stored in the memory if a request for the specific service is identified from another OS among the plurality of OSs.

5. The device of claim 1, wherein the at least one processor is configured to
map setting information of the electronic device to the type and setting value of the setting information and store the mapped setting information in the memory if the setting information of the electronic device is input through any one OS among the plurality of OSs, and
execute another OS among the plurality of OSs on the basis of the setting information stored in the memory.

6. The device of claim 5, wherein the setting information of the electronic device includes at least one of system setting information, display setting information, or network setting information.

7. The device of claim 1, wherein the at least one processor is configured to
map an obtained network setting information to a specific communication method and store the mapped network setting information in the memory if the network setting information related to the specific communication method is obtained from any one OS among the plurality of OSs, and
control communication based on the specific communication method to be performed by another OS among the plurality of OSs on the basis of the network setting information stored in the memory.

8. The device of claim 1, further comprising a display,
wherein the at least one processor is configured to
control a user interface (UI) for selecting the OS for processing the signal for each request type to be displayed on the display, and
store, in the memory, information on the OS that is selected through the UI for processing the signal for each request type.

9. A method for controlling an electronic device, the method comprising:
identifying a request type of a received signal if a signal is received from an external device through a communication interface during execution of a plurality of operating systems (OSs);
identifying an OS for processing the received signal from among the plurality of OSs on the basis of the identified request type of the signal and information stored in a memory on the OS for processing the signal for each request type that is received from the external device; and
controlling the received signal to be processed by the identified OS.

10. The method of claim 9, wherein the plurality of OSs include a primary OS and a sub-OS,
the information stored in the memory includes indicator information indicating whether the OS for processing the signal for each request type that is received from the external device is the primary OS or the sub-OS, and
in the identifying of the OS,
the OS for processing the signal is identified from among the primary OS and the sub-OS on the basis of the indicator information corresponding to the identified request type of the signal.

11. The method of claim 10, wherein the information stored in the electronic device includes
first indicator information indicating whether the OS for processing the signal for each request type that is received from the external device based on a first communication method is the primary OS or the sub-OS, and
second indicator information indicating whether the OS for processing the signal for each request type that is received from the external device based on a second communication method is the primary OS or the sub-OS, and
in the identifying of the OS,
the OS for processing the signal is identified from among the primary OS and the sub-OS on the basis of the first indicator information if the signal received from the external device is a signal based on the first communication method, and
the OS for processing the signal is identified from among the primary OS and the sub-OS on the basis of the second indicator information if the signal received from the external device is a signal based on the second communication method.

12. The method of claim 9, further comprising:
mapping access information obtained during execution of a specific service to access information for the specific service and storing the mapped access information in the memory if the specific service is executed by using any one OS among the plurality of OSs; and
executing the specific service on the basis of the access information for the specific service stored in the memory if a request for the specific service is identified from another OS among the plurality of OSs.

13. The method of claim 9, further comprising:
mapping setting information of the electronic device to the type and setting value of the setting information and storing the mapped setting information in the memory if the setting information of the electronic device is input through any one OS among the plurality of OSs; and
executing another OS among the plurality of OSs on the basis of the setting information stored in the memory.

14. The method of claim 13, wherein the setting information of the electronic device includes at least one of system setting information, display setting information, or network setting information.

15. A non-transitory computer-readable recording medium including a program for executing a method for controlling an electronic device, wherein the method includes
identifying a request type of a received signal if a signal is received from an external device through a communication interface during execution of a plurality of operating systems (OSs),
identifying an OS for processing the received signal from among the plurality of OSs on the basis of the identified request type of the signal and information stored in a memory on the OS for processing the signal for each request type that is received from the external device, and
controlling the received signal to be processed by the identified OS.
